# EUROPEAN PATENT SPECIFICATION

(11) **EP 1 620 662 B1**
(45) Date of publication and mention of the grant of the patent: **22.07.2009**
(21) Application number: 03721174.5
(22) Date of filing: 06.05.2003
(51) Int. Cl.: F16H 1/12

(54) **CROWN GEAR AND CROWN GEAR TRANSMISSION**
KRONENRAD UND KRONENRADGETRIEBE
COURONNE D'ENGRENAGE ET TRANSMISSION AVEC COURONNE D'ENGRENAGE

(43) Date of publication of application: 01.02.2006
(73) Proprietor: ASS AG, 3186 Düdingen (CH)
(72) Inventor: ENGELMANN, Michael, D-53757 Sankt Augustin (DE); DONDERTMAN, Johan, Willem, Gerald, NL-7475 RM Markelo (NL)
(74) Representative: Iemenschot, Johannes Andreas
(86) International application number: PCT/NL2003/000333
(87) International publication number: WO 2004/099649

(56) References cited:
- WO-A-96/12585
- GB-A- 749 404
- US-A- 2 669 904
- US-A- 4 744 263
- BASSTEIN, SYSTRA: "New Developments in Design Manufacturing and Applications of Cylkro-(Face) Gears" AMERICAN GEAR MANUFACTURES ASSOCIATION, - October 1993 (1993-10) XP008002398
- BASSTEIN G ET AL: "NEW DEVELOPMENTS IN DESIGN, MANUFACTURING AND APPLICATIONS OF CYLKRO -(FACE) GEARS" NEW DEVELOPMENTS IN DESIGN, MANUFACTURIG APPLICATIONS CYLKRO, XX, XX, 1 October 1993 (1993-10-01), pages 1-12, XP000534179
- LITVIN F L ET AL: "DESIGN AND GEOMETRY OF FACE-GEAR DRIVES" TRANSACTIONS OF THE ASME JOURNAL OF MECHANICAL DESIGN, AMERICAN SOCIETY OF MECHANICAL ENGINEERS, NEW YORK NY, US, vol. 114, no. 4, 1 December 1992 (1992-12-01), pages 642-647, XP000431666 ISSN: 1050-0472

## Description

The invention relates to a crowngear in accordance with the preamble of claim 1 and a transmission according to the preamble of claim 6. WO96/12585 discloses a gear transmission with a crown gear in which, through measures which are simple and cheap to carry out, the design engineer can select the tooth clearance which occurs, in order to obtain the most advantageous load pattern, said tooth clearance being independent of the axial position of the cylindrical pinion, so that the assembly of a cylindrical pinion and a face gear is simple to carry out. Crowngears of this type are known. The drawback of the known crowngears is that the shape of the toothing is relatively unsuitable for making crowngears by means of chipless forming, since the mold or die which is used for this purpose is preferably provided with rounded transitions. If fillets are used at the crowngear, the crowngear tooth flanks become smaller and the load-bearing capacity is reduced.

To avoid this drawback, the crowngear is designed in accordance with the characterizing part of claim 1 and claim 6. As a result, while the fillet is being formed, the crowngear tooth flank is only reduced in size to a limited extent in particular at the inner periphery, with the result that the load-bearing capacity is scarcely reduced.

According to a refinement, the crowngear is designed in accordance with claim 2. As a result of the second fillet radius being made larger than the first fillet radius, the pinion can be designed with a wider root and can therefore be made stronger.

According to a refinement, the crowngear is designed in accordance with claim 3. The crowngear tooth flanks can intersect one another at the outer circumference of the crowngear, so that a sharp transition can be formed. This is avoided by arranging a fillet between the crowngear tooth flanks.

According to a refinement, the device is designed in accordance with claim 4. As a result, the forging die can be designed with a more or less constant fillet at the root of the forging teeth, i.e. those parts of the forging die which form the crowngear tooth flanks. As a result, the strength of the die is more or less constant over the entire width of the tooth.

According to a refinement, the crowngear is designed in accordance with claim 5. This allows the crowngear tooth flanks to be remachined.

The invention is explained below with reference to a number of exemplary embodiments and with the aid of a drawing, in which:
figure 1 shows a diagrammatic cross section through a crowngear transmission,
figure 2 shows a perspective view of a crowngear as used in the transmission shown in figure 1,
figure 3 shows a side view of a crowngear tooth,
figure 4 shows parts of the cross sections aa, bb, cc, dd and ee of the crowngear tooth shown in figure 3, and
figure 5 diagrammatically depicts the meshing between a crowngear tooth and a pinion.

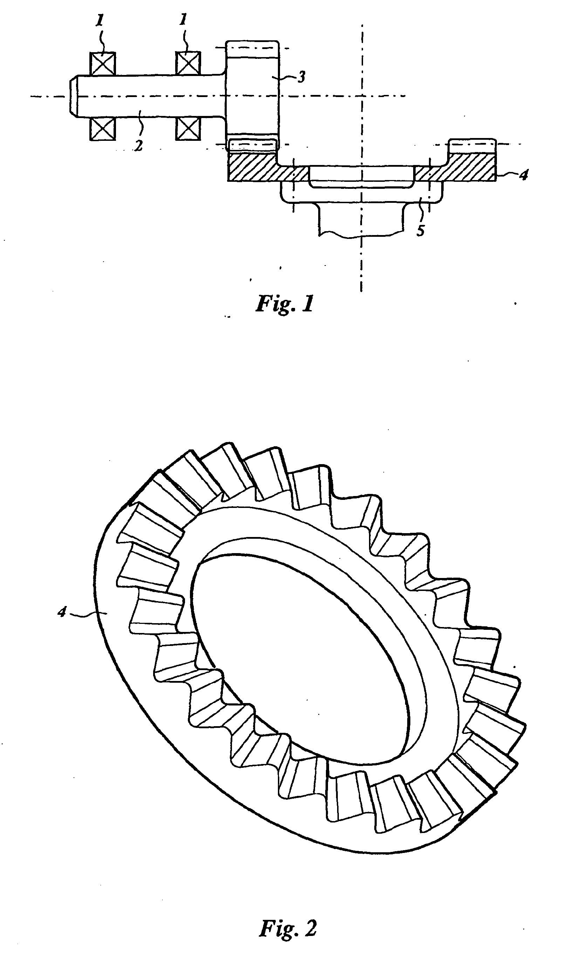

Figure 1 shows a crowngear transmission in which an axle 2 is provided with a cylindrical pinion 3. The pinion 3, as is characteristic of crowngear transmissions, is provided with involute toothing, the involute toothing merging by means of a fillet into a dedendum circle. The axle 2 can rotate in bearings 1. The cylindrical pinion 3 meshes with a crowngear 4 which is mounted on an axle 5. The center axes of the axle 2 and the axle 5 intersect one another at a right angle. In the embodiment shown, the pinion 3 is a cylindrical pinion with straight toothing and the crowngear 4 which interacts with it has a crowngear toothing with straight teeth as shown in figure 2.

In addition to the embodiment of the crowngear transmission in which the cylindrical pinion 3 has straight toothing and the center axes of the axles 2 and 5 intersect one another at an angle of 90°, which is the design which is shown and is the most simple, the crowngear transmission according to the invention may also be designed with a cylindrical pinion with helical toothing. It is also possible for the center axes to intersect and/or cross one another at a different angle. The shape of the crowngear toothing is adapted to situations of this type, so that there is always a correct meshing between the cylindrical pinion 3 and the crowngear 4.

The crowngear 4 can be produced in various ways. One known method is for the crowngear toothing to be formed by material-removing machining in material which has the external dimensions of the crowngear 4. A material-removing machining operation which is in widespread use is milling using a hob. During the material-removing machining, sharp transitions are formed between the various machined surfaces and/or the outer surfaces of the starting material. The transition from the crowngear tooth flank to an outer surface of the starting material is sharp, and at the outer circumference of the crowngear 4 where the crowngear tooth flanks intersect one another the intersecting crowngear tooth flanks also form a sharp transition. In the exemplary embodiment shown here, the design of the crowngear is modified and these transitions are provided with a fillet, so that the crowngear can be made by means of chipless forming, such as forging. In the perspective view shown in figure 2, these fillets can be seen on the crowngear 4.

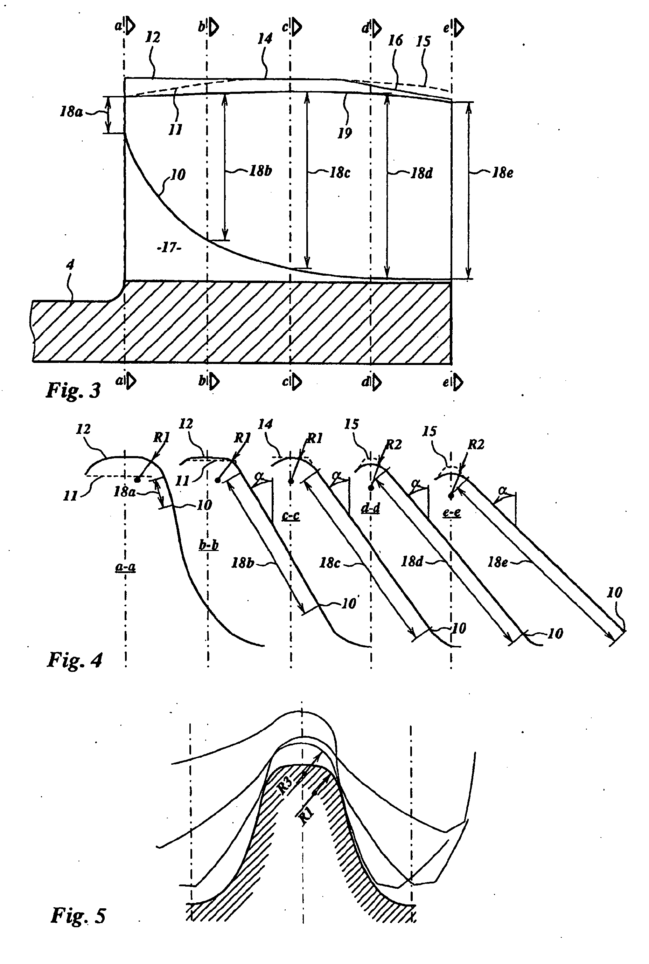

Figures 3 and 4 show the way in which the fillets are formed on the crowngear toothing, figure 3 showing a side view of a crowngear tooth and figure 4 showing part of the cross sections aa, bb, cc, dd and ee through the crowngear tooth shown in figure 3. At the root of the crowngear tooth, the active crowngear tooth flank is delimited by a root transition 10. The root transition 10 is the boundary between a root fillet 17 and the active crowngear tooth flank. This means that the pinion which interacts with the crowngear 4 only meshes with the crowngear 4 above this root transition 10. At the top side, the crowngear tooth is partly delimited by a top surface.

The height of the engagement area which can mesh with the pinion 3 is indicated by line sections 11, 14 and 15 in figure 3. The engagement area at line section 14 in the center has the maximum height; this height is limited by the need for a clearance between the dedendum circle of the pinion 3 and the crowngear tooth, and therefore the line section 14 also indicates the maximum height of the top surface. Toward the inner circumference, the height of the meshing area decreases as indicated by line section 11; this is necessary since otherwise the crowngear tooth will come into contact with the root fillet of the pinion 3.

Toward the outer circumference, the height of the meshing area decreases as indicated by line section 15. Toward the outer circumference, the inclination of the active crowngear tooth flank, indicated by a pressure angle α, increases. At the inner circumference, the pressure angle α is, for example, ten degrees, and at the outer circumference, the pressure angle α is, for example, forty-five degrees. At the outer circumference, the two flanks of a crowngear tooth will intersect one another below the maximum permissible height indicated by the line section 14, the tooth height at which this takes place decreasing as the pressure angle a increases and therefore as the diameter increases. In many cases, it is undesirable for the crowngear tooth flanks to intersect one another, since the sharp point which is then formed during use may give rise to the formation of cracks. Therefore, in practice the shape of the starting material is matched to the outer circumference, where a top surface is formed, as indicated at cross sections dd and ee. As a result of the tooth height being limited, the crowngear tooth flanks are prevented from intersecting, with the result that the sharp transition does not occur, as indicated in cross sections dd and ee.

During the designing of crowngears which are made with the aid of a mold or die, for example by forging, it is important for the top side of the crowngear teeth to be provided with fillets, so that in the die, the root of the forging teeth, i.e. those parts of the forging die which form the crowngear tooth flanks, also acquire fillets. This improves the forging process and lengthens the service life of the dies. It is also advantageous for the crowngear teeth to be provided with fillets on the top side for other processes used to make crowngears by chipless forming, for example sintering, injection-molding, casting and drop forging.

When the fillet is being formed in accordance with the invention, the crowngear tooth acquires, at the inner circumference, a top surface which has the maximum permissible height as indicated by the line section 12. The height of this is equal to the height indicated for the center of the crowngear tooth by the line section 14 and is determined by the dedendum circle of the pinion 3 which interacts with the crowngear 4 and the clearance required between crowngear 4 and pinion 3. Between the crowngear tooth flank and the top surface there is a fillet with a radius R₁,- the fillet being tangent on the crowngear tooth flank and on the top surface. As the pressure angle a of the crowngear tooth flank increases in the direction of the outer circumference, the flat part of the top surface between the fillet towards one crowngear tooth flank and the fillet towards the other crowngear tooth flank becomes smaller and ultimately disappears. The two crowngear tooth flanks are now connected to one another by a fillet with radius R₂, and as the pressure a of the crowngear tooth flank increases, the tooth height will be reduced, as can be seen at cross sections dd and ee. The height of the crowngear tooth at the outer circumference is indicated by a line 16.

Figure 5 shows the teeth of the pinion 3 in various positions with respect to a crowngear tooth of the crowngear 4. The involute of the pinion tooth merges into the dedendum circle by means of the root fillet with a fillet radius R₃. To prevent the top side of the crowngear teeth, which are raised at the inner circumference, from coming into contact with the tooth root of the pinion 3, the radius R₁ of the fillet of the raised crowngear tooth must be larger than the fillet radius R₃. It will be clear to the person skilled in the art that the fillet between the involute and the dedendum circle can be formed by the hobbing process which is used to make the pinion, and consequently is not an exact arc. The fillet radius R₃ is in that case the inscribed arc in the root fillet.

In figures 3 and 4, the transition between the crowngear tooth flank which meshes with the pinion 3 and the fillet with fillet radius R₁ and the fillet with fillet radius R₂ is denoted by line 19. The height of the crowngear tooth flank which meshes with the pinion 3 is indicated in the various cross sections aa, bb, cc, dd and ee by 18a, 18b, 18c, 18d and 18e, respectively. As can be seen from figures 3 and 4, at the inner circumference the engagement area has scarcely decreased inside as a result of the formation of the fillets.

In the exemplary embodiment shown, the crowngear tooth is provided on the top side with fillets with a fillet radius R₁ and a fillet radius R₂, which are identical to one another over the entire tooth width. Of course, it is not necessary for the fillet to be identical over the entire width. In a preferred embodiment in which the tooth head is raised at the inner circumference, as discussed above, the fillet radius R₁ at the inner circumference has to be larger than R₃.

The above-described design of the crowngear can be used to make a mold or die. In this case, it is obviously possible for wheels which have been made using the mold or die to undergo further machining steps. The wheels can be remachined by cutting and/or grinding, if appropriate after they have been hardened. During this remachining, some of the fillets described above can be removed without correct meshing of the crowngear being prevented.

For the sake of completeness, it is also pointed out here that it is customary for crowngears to be provided with a crowning, in which case the crowngear tooth root is completely parallel to the pinion toothing and/or pinion gear and the crowngear tooth root may have a crowning of, for example, 1-5% of the width of the crowngear tooth. Crowngears with a crowning of this type likewise have a crowngear tooth root which is parallel to the pinion toothing and/or the pinion tooth root.

## Claims

1. Crowngear for use in a geared transmission,
the crowngear (4) being designed to interact with a cylindrical pinion (3), having pinion toothing with pinion tooth roots being parallel to the axis of rotation of the pinion, and the pinion toothing being involute and
merging, by means of a first fillet with a first fillet radius(R3), into a dedendum circle,
and the crowngear having
a crowngear toothing with crowngear tooth flanks which can mesh with the pinion toothing, the crowngear tooth flanks merging at the underside into a crowngear tooth root (17)
with a lowest point parallel to the pinion tooth root when interacting with the pinion and being partially delimited at the top side by a top surface,
**characterised in that**
in the vicinity of the inner circumference of the crowngear the top surface (12) is raised with respect to the upper boundary (11) of the crowngear tooth flank
and optionally has a constant height from the lowest point of the crowngear tooth root,
and a second fillet is arranged between the crowngear tooth flanks and the top surface, with a second fillet radius(R1),
the second fillet being tangent on the top surface (12) and the crowngear tooth flank.

2. Crowngear as claimed in claim 1, in which the second fillet radius (R₁) is greater than the first fillet radius (R₃).

3. Crowngear as claimed in claim 1 or 2, in which the crowngear tooth flanks are partly connected to one another by a third fillet with a third fillet radius (R₂) which is tangent on the crowngear tooth flanks, and the height of the crowngear tooth at the location of the third fillet is lower than the highest point of the top surface.

4. Crowngear as claimed in claim 3, in which the second fillet radius (R₁) is more or less equal to the third fillet radius (R₂).

5. Crowngear as claimed in one of the preceding claims, in which part of the second fillet and/or third fillet has been removed by remachining of the crowngear.

6. Transmission having a crown gear and a cylindrical pinion,
the crowngear (4) being designed to interact with the cylindrical pinion (3), which cylindrical pinion has pinion toothing with pinion tooth roots being parallel to the axis of rotation of the opinion,
and the pinion toothing being involute and
merging, by means of a first fillet with a first fillet radius(R3), into a dedendum circle,
and the crowngear having
a crowngear toothing with crowngear tooth flanks which can mesh with the pinion toothing,
the crowngear tooth flanks merging at the underside into a crowngear tooth root (17)
with a lowest point parallel to the pinion tooth root and
being partially delimited at the top side by a top surface,
**characterised in that**
in the vicinity of the inner circumference of the crowngear the top surface (12) is raised with respect to the upper boundary (11) of the crowngear tooth flank
and optionally has a constant height from the lowest point of the crowngear tooth root,
and a second fillet is arranged between the crowngear tooth flanks and the top surface, with a second fillet radius (R1),
the second fillet being tangent on the top surface (12) and the crowngear tooth flank.

## Patentansprüche

1. Kronrad zur Verwendung in einem Zahngetriebe,
wobei das Kronrad (4) so ausgebildet ist, dass dieses zusammenwirkt mit einem zylindrischen Ritzel (3), mit einen Ritzelverzahnung mit Ritzelzahnwutzeln, die parallel zur Drehachse des Ritzels verlaufen, und die Ritzelverzahnung involut ist und mittels einer ersten Kehle mit einem ersten Innenradius (R3) in einen Fußkreisdurchmesser übergeht,
und das Kronrad aufweiset
eine Kronrad-Verzahnung mit Kronrad-Zahnflanken, die mit der Ritzelverzahnung kämmen können, wobei die Kronrad-Zahnflanken an der Unterseite in eine Kronrad-Zahnwurzel (17) übergehen,
wobei sich ein tiefster Punkt parallel zu der Ritzelzahnwurzel befindet während der Interaktion mit dem Ritzel und
diese an der Oberseite teilweise durch eine Oberseitenfläche begrenzt sind,
**dadurch gekennzeichnet, dass**
in der Nähe des Innenumfangs des Kronrades die Oberseitenfläche (12) in Bezug zu der oberen Grenze (11) die Kronrad-Zahnflanke erhöht ist und optional eine konstante Höhe vom tiefsten Punkt der Kionrad-Zahnwurzel aus hat,
und eine zweite Kehle zwischen den Kronrad-Zahnflanken und der Oberseitenfläche mit einem zweiten Innenradius (R1) angeordnet ist,
wobei die zweite Kehle eine Tangente zur Oberseitenfläche (12) und die Kronrad-Zahnflanke bildet.

## Revendications

1. Couronne dentée destinée à être utilisée dans un entraînement par engrenages,
la couronne dentée (4) étant conçue pour avoir une action réciproque avec un pignon cylindrique (3), possédant une denture de pignon avec des pieds de dent de pignon parallèles à l'axe de rotation du pignon, et la denture de pignon étant en développante et
fusionnant, au moyen d'un premier arrondi avec un rayon de premier arrondi (R3), en un cercle de pied de dent,
et la couronne dentée possédant
une denture de couronne dentée avec des flancs de dent de couronne dentée qui peuvent s'engrener avec la denture de pignon, les flancs de dent de couronne dentée fusionnant au niveau de la sous-face en un pied de dent de couronne dentée (17)
avec un point le plus bas est parallèle au pied de dent de pignon pendant l'interaction avec le pignon, et
étant partiellement délimité au niveau du côté supérieur par une surface supérieure,
**caractérisée en ce que**,
dans le voisinage de la circonférence intérieure de la couronne dentée, la surface supérieure (12) est relevée par rapport à la limite supérieure (11) du flanc de dent de couronne dentée
et facultativement possède une hauteur constante à partir du point le plus bas du pied de dent de couronne dentée,
et un deuxième arrondi est agencé entre les flancs de dent de couronne dentée et la surface supérieure, avec un rayon de deuxième arrondi (R1),
le deuxième arrondi étant tangent sur la surface supérieure (12) et le flanc de dent de couronne dentée
